# EUROPEAN PATENT APPLICATION

(11) **EP 0 821 030 A1**
(43) Date of publication of application: **28.01.1998**
(21) Application number: 97108744.0
(22) Date of filing: 02.06.1997
(51) Int. Cl.: C08K 3/16, C08K 3/04, C08L 23/06, A63C 5/00

(54) **Material of low friction coefficient and application of the material in the manufacture of skis and similar equipment and a method of producing the material of low friction coefficient**

(30) Priority: 24.07.1996 CH 1848/96
(71) Applicant: Centeiro Trading LDA, 9000 Funchal/Madeira (PT)
(72) Inventor:
(74) Representative: Gaggini, Carlo, Dipl.-Ing.

(57) **Abstract**

The present invention concerns a new type of material presenting a low coefficient of friction, a preferred application of which material is the manufacture of skis and similar gliding objects, as well as a method of producing said material.

According to the invention the material is composed of a mixture of polythene, preferentially polythene of high molecular weight, and of fluorographite.

If fluorographite is added to the polythene at percentages varying from 3% to 50% (weight), preferentially ranging from 10% to 30% (weight), decreasing values of the coefficient of friction µ are obtained as the percentage of fluorographite content is increased owing to which said material, endowed also with the required characteristics of mechanical resistance, is ideally suited for the manufacture of skis.

## Description

According to the present state of the art the material used for ski soles is high density polythene (polyethylene) of high molecular weight.

Other materials such as polypropylene, polymetacrylate, polytetrafluoroethylene could be even more suitable as gliding materials owing to their low values of surface tension and thus their low coefficient of friction. These materials, however, present chemical and physical-chemical properties which for the time being render these materials uninteresting to be used for soles of skis.

The useful characteristics of polythene on the other hand (notwithstanding the fact that its surface tension is 31 to 33 dynes/cm merely) stem from its high resistance against oxidation and from its mechanical characteristics such as its elasticity modulus, its great tensile strength, its high breaking load, all factors that increase with increasing molecular weight.

Theoretically the sole of a ski should be as smooth as possible and should consist of a material not eroded by icy snow in such a manner that the surface becomes corrugated (and thus causing higher friction forces) and presenting the lowest possible surface tension.

Thus today polythene of high molecular weight (U.H.M.W.) is chosen in order to make use of a material presenting good mechanical properties and sufficient hardness, and ski wax is resorted to in order to:
A) eliminate the corrugations and irregularities on the sole surface,
B) lower the surface tension,
C) provide a lubricant placed between the sole and the snow-covered ground.

The usual ski waxes are composed predominantly of linear paraffins which owing to their chemical structure are partially soluble in the polythene. This solubility, however, decreases as the degree of polymerisation is increased, and in polythenes of high molecular weight the solubility of paraffins is practically nil.

Thus the use of polythenes of high molecular weight has been envisaged because of their mechanical properties, but also increasing at the same time their impregnation capacity in a mechanical manner influencing the porosity of the material proper.

Essentially the question was dealt with in that the mechanical proper should be the ones of the polythenes of high molecular weight where as the impregnation capacity of the ski soles by paraffin should be based essentially on an absorption of physical nature owed just to the porosity of the material.

Using porous ski soles of the type mentioned the advantage furthermore was obtained that the sole proper could absorb particular ski waxes such the "Cera F" (a perfluoridated paraffin) presenting a surface tension of 16 to 18 dynes/cm (as opposed to the 28 to 30 dynes/cm of a normal paraffin) and which is not absolutely soluble in the polythene.

Another type of ski soles in use is the one obtained using polythene of high molecular weight with graphite.

Graphite functions as a solid lubricant being a hard material but presenting a low surface tension and a low coefficient of friction. The static coefficient (µ) of polythene on itself being of 0.2 and indeed is 0.12 for graphite on graphite. The addition of graphite to the polythene is aimed at:
- lowering the coefficient of friction of the ski sole which passes from a value of µ (static coefficient of friction) = 0.2 of the polythene to a value of µ=0.12 of the graphite;
- render the ski sole harder and more homogeneous also in its depth in order to render it less susceptible to abrasion, the same degree of gliding facility being maintained also after each scraping off of the corrugations which have formed during use;
- produce also non-porous ski soles which present better mechanical properties as graphite as such acts as a lubricant.

It thus is the goal of the present invention to further improve the gliding properties of the material of the ski sole by lowering the coefficient of friction further, in particular by obtaining a coefficient of friction of the material of less than µ = 0.2 corresponding to the coefficient of friction of the best ski soles known.

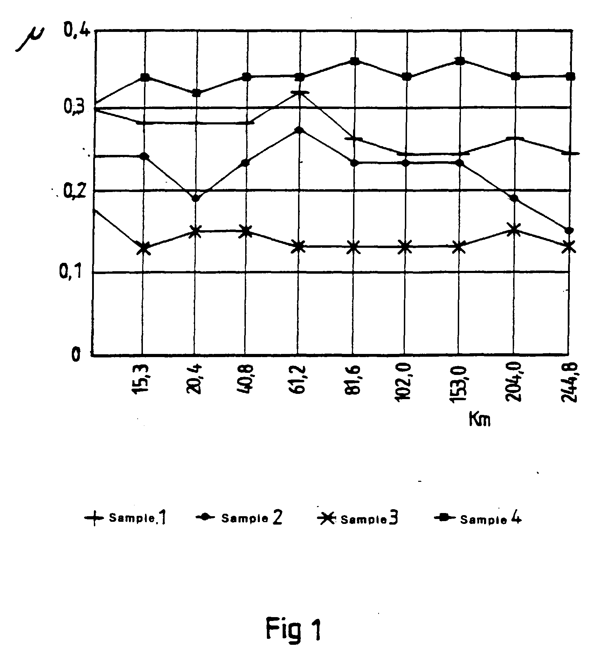

This goal as well as additional goals will be discussed in more detail in the following with reference to examples of embodiments of the present invention, and to a table, and to the Fig. 1 respectively, showing a diagram of the coefficient of friction µ of a certain number of samples of materials plotted against the distance in km covered by skis produced using various materials according to the present invention.

The goal of the present invention is achieved using a material of low friction coefficient presenting the characteristics of the claim 1, and respectively applying said material in the manufacture of gliding objects, according to the claim 8, and in particular to the manufacture of skis to be used on snow according to the claim 9. Furthermore the invention provides a method of producing the material according to the claim 9.

Before various examples of embodiments of the present invention are described in more detail some specifications are to be given concerning the properties of the materials used in composing the inventive mixture.

Fluorographite is a solid lubricant obtained by direct fluoridation of graphite with elementary fluorine. Its coefficient of friction is 0.08 (compare the Japanese Patent 85/67593 dated April 17, 1985) as compared to 0.12 of the graphite.

This is a particular kind of the fluorocarbons in general, obtained from other types of carbon and can be considered as a carbon polymer in which between the various layers of carbon atoms fluorine atoms are interspersed.

Also the different properties of the graphite subject to the process can influence the coefficient of friction of the fluorographite obtained (compare e.g. Japanese Patent 85/67594 dated April 17, 1985).

Its summary formula is (CF)ₙ in which the molecular proportion F/C can vary from 0.5 to 1.3, and more generally from 0.95 to 1.3.

Its colour varies from black to grey to white according to its fluorine contents. Its real specific density varies from 2.5 to 2.8 g/cm³ whereas its apparent density varies from 0.5 to 0.9 g/cm³ depending on the type of graphite initially subject to the process.

The fluorographite presents the lowest known surface tension of 12 to 13 dynes/cm owing to which forms the best solid lubricant in absolute terms.

It is to be mentioned also that the use of fluorographite as a solid lubricant is known as such since a long time.

It has been applied in many lubricants with fats, perfluoridated oils, teflon powder, etc., (compare e.g. Japanese Patents 89/266.192 dated October 24, 1989; 84/149.996 dated August 28, 1984 and German Patent 1'594'392 dated April 26, 1973, etc.).

This substance furthermore has been incorporated in various polymer materials, alone or associated with graphite, MoS₂, glass fibres, etc.

The polymer materials employed thus far for lowering the coefficient of friction and to enhance the wear resistance are e.g.:
- polyamidic resins (Japanese Patent 91/252'453 dated November 11, 1991);
- ethylene-tetrafluoroethylene copolymers (Russian Patent 899'597 dated January 23, 1982);
- epoxy-silicones (Russian Patent 1'031'993 dated July 30, 1983)
- fluoropolymers and polyacetals (Japanese Patent 87/54'753 dated March 10, 1987).

To this day, however, it has never been proposed that fluorographite be incorporated in polythene, and particularly in polythene of high molecular weight, with the goal of e.g. lowering the coefficient of friction and to apply this material in producing gliding objects presenting a low coefficient of friction, such as e.g. ski soles and in all other sectors in which polythene of high molecular weight is applied normally.

Various examples are given in the following, demonstrating the effect on the coefficient of friction µ obtained if fluorographite is mixed with the polythene.

The examples 1, 2 and 3 show the influence on the coefficient of friction µ in function of the ratios of percentages in the mixture. It stems from the examples that, as could be expected, a higher percentage of fluorographite results in a reduction of the value µ.

The example 4 in which no fluorographite is applied serves as a point of reference for better demonstrating of the important influence the addition of fluorographite exerts on the coefficient of friction µ.

### Example 1

A mixture was prepared containing 10% (weight) of fluorographite in powder form with R.M. (molecular proportion) F/C = 1.3 and with particle diameters below 15 microns, and 90% (weight) of polythene of high molecular weight of the type Hostalen GUR 4150.

Upon melting the blended material in a processing cycle, in which various pressures ranging from 50 to 100 atmospheres and a maximum temperature of 220°C were applied, cylinders of 250 mm diameter and of 150 mm length were obtained. On this material, transformed into sheets, the coefficient of friction was measured according to the ASTM D 3702 method using a steel C40 as counter-surface material. The load and speed conditions were chosen as follows:
- Load = 6 pounds corresponding to a specific pressure of 0.21 Mpa = 21 kg/cm^{2;}
- Rotational speed = 1000 rpm corresponding to a linear speed of 1.41 m/s.

The coefficient of friction µ measured on the material in sheet form resulted as µ =0.27.

### Example 2

Proceeding just as for example 1 and using the same input materials a mixture was made containing 20% (weight) of fluorographite and 80% (weight) of polythene.

The coefficient of friction µ measured on the material in sheet form resulted as µ =0.22.

### Example 3

Proceeding just as for example 1 and using the same input materials a mixture was made containing 30% (weight) of fluorographite and 70% (weight) of polythene.

The coefficient of friction µ measured on the material in sheet form resulted as µ=0.13.

### Example 4

Proceeding just as for example 1 but using only the polythene material Hostalen GUR 41500 applied before.

The coefficient of friction µ measured on the material in sheet form resulted as µ =0.35.

The average values of the dynamic coefficients of friction µ are listed in the **Table 1.**

**Table 1**

| **Sample** | µ | % **of Fluorographite** |
|---|---|---|
| 1 | 0.27 | 10% |
| 2 | 0.22 | 20% |
| 3 | 0.13 | 30% |
| 4 | 0.35 | 0% |

In the Figure 1 the behaviour of the samples over time is shown, the variation of the coefficient of friction of the various mixtures tested being plotted against the duration of use, or against the number of km covered on skis respectively. In the Table 1, in which the coefficient µ is shown on the ordinate and the number of km covered is shown on the abscissa, it can be seen that the coefficient of friction remains essentially constant owing to the fact of course that the good running or gliding properties of the material obtained are inherent properties of the material itself in which the components are blended intimately homogenised, as opposed to the situation if ski waxes are applied which, notwithstanding the forces applied to make them penetrate the base material, always remain substances applied superficially to the gliding surface.

## Claims

1. Material presenting a low coefficient of friction consisting of a mixture of two components one of which is endowed with good mechanical properties and hardness whereas the second one is instrumental to lower the coefficient of friction,
**characterized in that**
the first component of the mixture consists of polythene whereas the second component consists of fluorographite.

2. Material according to the claim 1
**characterized in that**
the contents of fluorographite in the polythene ranges from 3% to 50% (weight) and preferentially ranges from 10% to 30% (weight).

3. Material according to the claim 1
**characterized in that**
the polythene used is a polythene of high molecular weight.

4. Material according to the claim 1
**characterized in that**
the fluorographite used presents a molecular proportion R.M. F/C ranging from 0.5 and 1.3 and preferentially ranging from 0.95 to 1.3.

5. Material according to the claim 1
**characterized in that**
the particle size of the fluorographite applied is below 100 microns and preferentially is below 15 microns.

6. Method of manufacturing the material presenting a low coefficient of friction according to one of the preceding claims 1 through 5,
**characterized in that**
the mixture of polythene and fluorographite is obtained by melting or sintering at high temperature and is processed, after solidification, to obtain surfaces presenting a coefficient of friction µ below 0.20.

7. Method of manufacturing according to the claim 6,
**characterized in that**
the melting of the mixture is effected in a processing cycle in which variations of pressure are provided from 50 to 100 atmospheres at a maximum temperature of 220°C.

8. Application of the material presenting a low coefficient of friction according to one of the claims 1 through 5 in the manufacture of gliding objects such as runners, gliding guides, etc., presenting a coefficient µ below 0.20.

9. Application of the material according to claim 8,
**characterized in that**
the gliding objects are skis to be used on snow.

10. Application of the material according to claim 9,
**characterized in that**
the whole ski consists of the material.

11. Application of the material according to claim 9,
**characterized in that**
only the portion of the ski contacting the snow surface consists of the material.
